# EUROPÄISCHE PATENTSCHRIFT

(11) **EP 3 822 198 B1**
(45) Veröffentlichungstag und Bekanntmachung des Hinweises auf die Patenterteilung: **18.05.2022**
(21) Anmeldenummer: 20204362.6
(22) Anmeldetag: 28.10.2020
(51) Int. Cl.: B65G 21/20, B65G 43/08, G06K 7/10

(54) **STÜCKGUTERFASSUNGSANORDNUNG**
PIECE GOOD DETECTION ASSEMBLY
AGENCEMENT DE DÉTECTION DE MARCHANDISES DE DÉTAIL

(30) Priorität: 13.11.2019 DE 102019130572
(43) Veröffentlichungstag der Anmeldung: 19.05.2021
(73) Patentinhaber: Deutsche Post AG, 53113 Bonn (DE)
(72) Erfinder: Tzschichholtz, Ingo, 60435 Frankfurt am Main (DE); Bais, Guido, 53639 Königswinter (DE)
(74) Vertreter: Michalski Hüttermann & Partner Patentanwälte mbB

(56) Entgegenhaltungen:
- WO-A1-2010/099874
- US-A- 5 582 286
- US-A- 5 869 827
- US-B1- 6 588 578

## Beschreibung

### Technisches Gebiet

Die Erfindung betrifft eine Stückguterfassungsanordnung umfassend einen Bandförderer zum Transportieren eines Stückgutes entlang einer Förderrichtung und einen optischen Sensor. Weiterhin betrifft die Erfindung ein Verfahren zum automatisierten Erkennen eines Identifikationskennzeichens des Stückgutes.

### Hintergrund

In Distributions- und Sortierzentren werden in der Regel Bandförderer eingesetzt, um Stückgüter zu transportieren. Die Stückgüter werden in solchen Anlagen oftmals aufgrund eines auf dem Stückgut aufgebrachten Identifikationskennzeichens sortiert.

Aufgrund von Standards, Gesetzen oder Richtlinien, wie beispielsweise aufgrund der Maschinenrichtlinie RL 2006/42/EG, sind Benutzer von Maschinen und Anlagen durch angemessene Schutzmaßnahmen vor Gefahren durch bewegliche Teile zu schützen. Einen Schutz der Benutzer kann bei Bandförderern durch Seitenführungen, sogenannte Sideguards, erreicht werden, die den Gefahrenbereich, innerhalb dessen sich der Bandförderer befindet, seitlich umschließen. Die Seitenführungen können gleichzeitig verhindern, dass Stückgüter vom Band herunterfallen.

Zwecks Sortierung der Stückgüter ist es bekannt, die Anlagen mit Sensoren auszustatten, welche eine automatische Erfassung der Stückgüter ermöglichen. Die Sensoren werden im Allgemeinen in direkter Nähe zum Band des Bandförderers angebracht, da hierdurch eine direkte Sichtlinie vom Sensor auf die Stückgüter auf dem Band verwirklicht wird und die Seitenführungen oder sonstigen Schutzmaßnahmen nicht die Sicht auf die Stückgüter versperren. Diese Anordnung führt oft zu einer aufwändigen und platzraubenden Konstruktion der Schutzmaßnahmen. Weiterhin werden durch diese Anordnung die Sensoren innerhalb des Gefahrenbereichs platziert. Dies führt dazu, dass bei Wartungs- und Servicemaßnahmen der Sensoren die Anlage in der Regel abgeschaltet werden muss, da die Sensoren nur zugänglich sind, wenn der Gefahrenbereich durch eine Wartungs- und Serviceperson betreten wird US 6 588 578 B1 beschreibt die Merkmale der Oberbegriffe der Ansprüche 1 und 11.

### Beschreibung

Ausgehend von dieser Situation ist es Aufgabe der Erfindung, eine Stückguterfassungsanordnung und ein Verfahren zum automatisierten Erkennen eines Identifikationskennzeichens eines Stückgutes bereitzustellen, welche die obigen Nachteile nicht aufweist. Insbesondere soll eine Stückguterfassungsanordnung und ein entsprechendes Verfahren bereitgestellt werden, das keine Gefahr für Benutzer darstellt und erlaubt, die Sensoren ohne Abschalten des Bandförderers zu warten.

Die Aufgabe wird durch die Merkmale der unabhängigen Ansprüche gelöst. Vorteilhafte Ausgestaltungen sind in den Unteransprüchen angegeben.

Demnach wird die Aufgabe durch eine Stückguterfassungsanordnung umfassend einen Bandförderer zum Transportieren eines Stückgutes aufweisend ein Identifikationskennzeichen entlang einer Förderrichtung und umfassend einen optischen Sensor gelöst, wobei der Bandförderer parallel zu der Förderrichtung eine Seitenführung zum Verhindern eines Herunterfallens des Stückgutes von einem Band des Bandförderers aufweist, die Seitenführung in einem Bereich mit einem Gitter ausgeführt ist, der Sensor seitlich von dem Band und hinter dem Gitter an einer dem Band abgewandten Seite der Seitenführung angeordnet ist, so dass das Band und das Gitter in einem Sichtfeld des Sensors liegen, und ein Tiefenschärfebereich des Sensors schmaler als eine Breite des Bandes ist, so dass das Identifikationskennzeichen des Stückgutes durch den Sensor optisch erfassbar ist.

Ein wesentlicher Aspekt der vorgeschlagenen Lösung liegt darin, dass a) ein Bereich der Seitenführung als Gitter ausgestaltet ist und b) der Tiefenschärfebereich des optischen Sensors schmaler als eine Breite des Bandes ist. Im Stand der Technik wurde versucht, den optischen Sensor außerhalb des Gefahrenbereichs anzuordnen, sprich den Sensor seitlich von dem Band und hinter der Seitenführung an einer dem Band abgewandten Seite der Seitenführung anzuordnen, und durch eine Lücke in der Seitenführung hindurch das Identifikationskennzeichen des Stückgutes auf dem Band zu erfassen, so dass beispielsweise das Sichtfeld des Sensors mit der Lücke in der Seitenführung übereinstimmt. Eine solche Anordnung erfordert jedoch eine äußerst genaue Positionierung des Sensors zur Lücke. Weiterhin führt eine solche Anordnung dazu, dass aufgrund der geringen zulässigen Größe der Lücke diese für den optischen Sensor als Blende wirkt, welche die Lichtmenge, die auf den optischen Sensor fällt, verringert und somit das Erfassen des Identifikationskennzeichens erschwert.

Hingegen wird in der erfindungsgemäßen Anordnung nicht durch eine Lücke des Gitters hindurch das Stückgut erfasst, sondern der Sensor wird derart angeordnet, dass das Gitter im Sichtfeld des Sensors ist. Dies führt dazu, dass der zuvor beschriebene Blendeneffekt nicht auftritt und eine hohe Lichtmenge auf den Sensor fällt. Allerdings wird in dieser Anordnung nicht nur das Band, auf dem das Stückgut transportiert wird, auf einer vom Sensor erzeugten optischen Abbildung abgebildet, sondern auch das Gitter, da es sich im Sichtfeld des Sensors befindet. Dadurch, dass der Tiefenschärfebereich des Sensors schmaler als die Breite des Bandes ist, ist der Tiefenschärfebereich des Sensors beim Fokussieren auf eine Bandmitte auf das Band begrenzt. Bevorzugt ist der Tiefenschärfebereich des optischen Sensors schmaler als 80% der Breite des Bandes, weiter bevorzugt schmaler als 50% der Breite des Bandes und besonders bevorzugt schmaler als 30% der Breite des Bandes. Dies führt dazu, dass trotz des Gitters im Sichtfeld des Sensors, das Identifikationskennzeichen des Stückgutes auf dem Band durch den Sensor optisch erfassbar ist. Durch das Begrenzen des Tiefenschärfebereichs auf das Band wird auf der optischen Abbildung das Gitter unscharf abgebildet, was somit erlaubt, das Identifikationskennzeichen des Stückgutes auf der optischen Abbildung trotz des Gitters zu erkennen.

Die Stückguterfassungsanordnung umfasst den Bandförderer zum Transportieren des Stückgutes entlang der Förderrichtung. Beim Stückgut handelt es sich bevorzugt um ein Transportgut, das sich am Stück transportieren lässt. Besonders bevorzugt handelt es sich um ein Paket und/oder Päckchen. Das Stückgut weist ein Identifikationskennzeichen auf, wobei das Stückgut bevorzugt anhand des Identifikationskennzeichens identifiziert und/oder sortiert werden kann. Beispielsweise kann es sich beim Identifikationskennzeichen um einen Strichcode oder um eine Zustelladresse handeln.

Bevorzugt wird das Stückgut auf dem Band des Bandförderers transportiert. Die Ausdehnung des Bandes senkrecht zur Förderrichtung entspricht bevorzugt der Breite des Bandes. Der Bandförderer kann jegliche Förderanlage oder jegliche Art von Stetigförderer sein, die ermöglicht, das Stückgut zu transportieren. Im Sinne der Erfindung ist unter Bandförderer auch ein Kettenförderer, Sorter, Kippschalensorter, Crossbeltsorter oder Rollenförderer zu verstehen, wobei das Stückgut im Falle eines Rollenförderers oder Kettenförderers nicht auf einem Band transportiert wird, sondern über eine Anordnung von Rollen bzw. auf Palletten oder in Boxen. Bei diesen bandlosen Förderanlagen ist unter Band im Sinne der Erfindung diejenige Vorrichtung zu verstehen, auf der das Stückgut aufliegt, während es von der Förderanlage transportiert wird. Insbesondere ist unter Band auch derjenige Bereich der Förderanlage und/oder des Bandförderers zu verstehen, indem sich das Stückgut während des Transportes durch die Förderanlage und/oder den Bandförderer befinden kann. Weiterhin ist bei bandlosen Förderanlagen unter Breite des Bandes insbesondere die Ausdehnung dieses Bereiches senkrecht zur Transportrichtung zu verstehen.

Der Bandförderer weist parallel zu der Förderrichtung eine Seitenführung auf, die bezweckt, das Herunterfallen des Stückgutes vom Band des Bandförderers zu verhindern. Bevorzugt ist die Seitenführung als eine Wandung ausgestaltet, die sich seitlich vom Band befindet und sich im Wesentlichen rechtwinklig zur Ebene des Bandes erstreckt. Weiter bevorzugt ermöglicht die Seitenführung, dass Benutzer des Bandförderers vor Gefahren, ausgehend vom Bandförderer, geschützt werden. Die Seitenführung ist bevorzugt derart ausgestaltet, dass sie die Anforderungen an feststehende trennende Schutzeinrichtungen gemäß RL 2006/42/EG erfüllt.

Weiterhin umfasst die Stückguterfassungsanordnung den optischen Sensor. Unter einem optischen Sensor ist im Sinne der Erfindung ein Sensor zu verstehen, der dazu ausgeführt ist, insbesondere mittels elektromagnetischer Strahlung eine optische Abbildung der Umgebung im Sichtfeld des Sensors zu erzeugen. Bevorzugt umfasst der optische Sensor eine Beleuchtungseinrichtung, um die vorhandene Lichtmenge zu erhöhen. Weiter bevorzugt arbeitet der optische Sensor in einem Wellenlängenbereich der elektromagnetischen Strahlung von 400 bis 800 nm. Der optische Sensor ist seitlich von dem Band und hinter der Seitenführung an der dem Band abgewandten Seite der Seitenführung angeordnet, also außerhalb des Gefahrenbereichs. Weiterhin ist der optische Sensor derart angeordnet, dass das Gitter und das Band im Sichtfeld des optischen Sensors sind. Der optische Sensor kann aufgrund des Gitters das Identifikationskennzeichen des Stückgutes auf dem Band des Bandförderers erfassen. Dafür ist bevorzugt bei Fokussierung auf die Bandmitte der Tiefenschärfebereich des Sensors auf das Band begrenzt.

Der optische Sensor kann grundsätzlich nur diejenigen Punkte der Umgebung als scharfe Bildpunkte in der optischen Abbildung wiedergegeben, die auf einer Fokusebene liegen, die sich in der Gegenstandsweite zur Linse befindet. Alle anderen Punkte, die sich auf näher oder weiter entfernt liegenden Ebenen befinden, erscheinen in der optischen Abbildung nicht mehr als Bildpunkte, sondern als Zerstreuungskreise. Je weiter die Ebene von der Fokusebene entfernt ist, desto größer werden die Zerstreuungskreise. Eng nebeneinander liegende Punkte der Umgebung, die nicht in der Fokusebene liegen, werden durch eng nebeneinander liegende Zerstreuungskreise abgebildet, die sich überdecken und in den Randbereichen vermischen, wodurch eine unscharfe optische Abbildung entsteht. Solange die Durchmesser der Zerstreuungskreise hingegen kleiner als eine Auflösung des optischen Sensors sind, wird die optische Abbildung weiterhin als scharf wahrgenommen. Somit entsteht der Eindruck, die optische Abbildung weist nicht nur eine Schärfeebene, sprich die Fokusebene auf, sondern einen Schärfebereich, sprich den Tiefenschärfebereich. Der Tiefenschärfebereich bezeichnet also den Bereich des Sichtfeldes des Sensors, innerhalb dessen von dem Sensor eine hinlänglich scharfe optische Abbildung erzeugt werden kann. Hinlänglich scharf bedeutet in diesem Zusammenhang bevorzugt, dass die Unschärfe der optischen Abbildung innerhalb des Tiefenschärfebereichs des Sensors nicht höher als die Auflösung des optischen Sensors ist. Besonders bevorzugt bedeutet hinlänglich scharf in diesem Zusammenhang, dass die Unschärfe der optischen Abbildung innerhalb des Tiefenschärfebereichs des Sensors ausreichend ist, damit das Identifikationskennzeichen des Stückgutes auf der optischen Abbildung, bevorzugt automatisiert von einer Auswerteeinrichtung, erkennbar ist.

Zwecks Erfassung des Identifikationskennzeichens des Stückgutes ist die Seitenführung in einem Bereich als Gitter ausgeführt. Der Bereich, indem die Seitenführung als Gitter ausgeführt ist, kann grundsätzlich beliebig groß sein. Bevorzugt ist allerdings vorgesehen, dass der Bereich, in dem die Seitenführung als Gitter ausgeführt ist, nicht mehr als 0,5, 0,3 oder 0,1 Meter lang ist, wobei damit die Länge parallel zur Förderrichtung des Bandförderers gemeint ist. Hinsichtlich der Höhe des Gitters, also der Erstreckung rechtwinklig zur Ebene des Bandes, ist bevorzugt vorgesehen, dass wenigstens 50% der Höhe der Seitenführung als Gitter ausgestaltet sind. Bevorzugt erfüllt die Seitenführung auch im Bereich des Gitters die Anforderungen an feststehende trennende Schutzeinrichtungen gemäß RL 2006/42/EG. Als Gitter ist im Sinne der Erfindung bevorzugt eine Einrichtung zu verstehen, die stellenweise optisch transparent ist. Beispielsweise kann es sich um ein Lochblech, um einen Maschendrahtzaun oder um einen Gitterrost handeln. Die optisch transparenten Stellen, beispielsweise die Lücken und/oder Löcher, können regelmäßig oder unregelmäßig angeordnet sein.

Die erfindungsgemäße Stückguterfassungsanordnung eignet sich besonders zum automatisierten Erfassen des Identifikationskennzeichens des Stückgutes und insbesondere zum automatisierten Erkennen des Identifikationskennzeichens des Stückgutes. Sie hat den Vorteil, dass auch bei einer Wartung des Sensors der Stückguterfassungsanordnung der Betrieb des Bandförderers nicht unterbrochen werden muss.

Gemäß einer bevorzugten Weiterbildung weist das Gitter im Sichtfeld des Sensors optisch intransparente Strukturen auf, wobei die optisch intransparenten Strukturen bevorzugt nicht mehr als 20% des Sichtfelds des Sensors bedecken. Das Gitter ist bevorzugt nicht aus einem optisch transparenten Material sondern aus einem optisch dichten Material gestaltet, so dass das Gitter optisch intransparente Strukturen aufweist. Die optisch intransparenten Strukturen sind beispielsweise die Drähte des Maschendrahtzauns oder das Blech des Lochblechs. Würde der Tiefenschärfebereich des Sensors nicht auf das Band begrenzt sein, sondern derart eingestellt werden, dass das Gitter hinlänglich scharf auf der optischen Abbildung abgebildet würde, würden diese optisch intransparenten Strukturen bevorzugt nicht mehr als 20% der Bildfläche der optischen Abbildung bedecken. In anderen Worten ist das Gitter bevorzugt derart ausgestaltet, dass bezogen auf das Sichtfeld des Sensors die optisch intransparenten Strukturen nicht mehr als 20% des Sichtfelds des Sensors bedecken. Somit ist die Lichtmenge die durch die optisch intransparenten Strukturen vom Sensor ferngehalten werden relativ gering. Ein solches Gitter lässt eine ausreichend hohe Lichtmenge passieren, so dass das Identifikationskennzeichen des Stückgutes auf der optischen Abbildung erkennbar ist.

Hinsichtlich der Ausgestaltung des Gitters ist gemäß einer weiteren bevorzugten Weiterbildung vorgesehen, dass das Gitter im Sichtfeld des Sensors optisch intransparente Strukturen aufweist, die in einer Ausdehnung kleiner als 0,5 cm, 1 cm oder 2 cm sind. Unter Ausdehnung der optisch intransparenten Strukturen ist bevorzugt ein kürzester Abstand zwischen zwei benachbarten optisch transparenten Stellen des Gitters zu verstehen. Es kann sich bei der Ausdehnung der optischen Strukturen, die kleiner als 2 cm sind, beispielsweise um die Dicke der Drähte des Maschendrahtzauns handeln. Die optisch intransparenten Strukturen sind also bevorzugt relativ schmal. In Kombination mit dem Tiefenschärfebereich, der bei Fokussierung auf die Bandmitte auf das Band begrenzt ist, führt dies dazu, dass die optisch intransparenten Strukturen auf der optischen Abbildung derart unscharf dargestellt werden, dass das auf der optischen Abbildung dahinter dargestellte Identifikationskennzeichen auf der optischen Abbildung gut erkennbar ist.

Gemäß einer weiteren bevorzugten Weiterbildung ist vorgesehen, dass das Gitter im Sichtfeld des Sensors kein optisch transparentes Material umfasst. Wie bereits erwähnt, ist das Gitter bevorzugt eine Einrichtung, die stellenweise optisch transparent ist. Diese optisch transparenten Stellen sind weiter bevorzugt materiallos, sprich als Lücken und/oder Löcher ausgeführt und nicht durch optisch transparentes Material ausgeführt. Optisch transparentes Material, wie beispielsweise Plexiglas oder Glas haben den Nachteil, dass sie mit der Zeit zerkratzen und ihre optische Transparenz verlieren. Weiterhin haben optisch transparente Materialien den Nachteil, dass unerwünschte Reflexionen entstehen, die das Erfassen des Identifikationskennzeichens erschweren. Beide Nachteile lassen sich vermeiden, wenn die optisch transparenten Stellen des Gitters als materiallose Stellen ausgeführt sind.

Wie bereits erwähnt führt die Tatsache, dass der Tiefenschärfebereich des Sensors schmaler als die Breite des Bandes ist, dazu, dass bei Fokussierung beispielsweise auf die Bandmitte der Tiefenschärfebereich des optischen Sensors auf das Band begrenzt ist. Der Fokuspunkt kann je nach Position des Stückguts unterschiedlich ausfallen. Bevorzugt liegt die Nahgrenze des Fokusbereichs hinter dem Gitter. Somit wird das Gitter auf der optischen Abbildung unscharf abgebildet, was erlaubt, das Identifikationskennzeichen des Stückgutes, welches auf der optischen Abbildung hinlänglich scharf abgebildet wird, zu erkennen. Wenn sich das Stückgut allerdings nicht in der Bandmitte, und somit mit einem Abstand zum Gitter befindet, sondern am Bandrand und direkt hinter dem Gitter, kann das Fokussieren des optischen Sensors auf das Stückgut dazu führen, dass ebenfalls das Gitter in den Tiefenschärfebereich des Sensors hineinfällt und hinlänglich scharf in der optischen Abbildung dargestellt wird. Dies würde dazu führen, dass auf der optischen Abbildung das Identifikationskennzeichen vom hinlänglich scharf dargestellten Gitter verdeckt würde und nicht mehr erkennbar wäre. Ausgehend von dieser Problematik sieht eine bevorzugte Weiterbildung der Erfindung vor, dass das Gitter im Sichtfeld des Sensors durch einen Spalt unterbrochen ist. Befindet sich das Stückgut nun am Bandrand und aus Sicht des Sensors direkt hinter dem Gitter, wird aufgrund des Spaltes im Gitter das Identifikationskennzeichen des Stückgutes nicht vom Gitter verdeckt. Somit ist das Identifikationskennzeichen des Stückgutes auch in diesem Fall auf der optischen Abbildung erkennbar. Weiterhin führt der Spalt im Gitter dazu, dass die Lichtmenge, die auf den optischen Sensor fällt, weiter erhöht wird, was das Erfassen des Identifikationskennzeichens des Stückgutes auch bei Fokussierung in die Bandmitte noch weiter erleichtert. Bevorzugt ist der Spalt, derart im Gitter ausgebildet, dass die Seitenführung auch mit Spalt die Anforderungen an feststehende trennende Schutzeinrichtungen gemäß RL 2006/42/EG erfüllt.

Hinsichtlich der Ausgestaltung des optischen Sensors ist gemäß einer bevorzugten Weiterbildung der Erfindung vorgesehen, dass der optische Sensor eine Kamera ist. Die Kamera ist bevorzugt dazu ausgestaltet, die optische Abbildung der Umgebung im Sichtfeld der Kamera zu erzeugen. Besonders bevorzugt handelt es sich um eine Zeilenkamera. Eine Zeilenkamera ist bevorzugt eine Kamera, deren Lichtsensor nur über eine Zeile verfügt, sprich ein Zeilenlichtsensor ist. Die Zeilenkamera weist also bevorzugt keinen zweidimensionalen Flächenlichtsensor auf, der über eine Vielzahl an Zeilen verfügt. Der Sichtbereich der Zeilenkamera ist aufgrund des Zeilenlichtsensors schmaler als der Sichtbereich einer Kamera mit Flächenlichtsensor. Zeilenkameras haben den Vorteil, dass sie bei gleicher Pixelzahl wie ein Flächenlichtsensor, eine höhere räumliche Auflösung aufweisen. Insbesondere bei Bandförderern, wo sich das Stückgut aufgrund des Bandförderers bewegt, können auch durch mehrfaches Erzeugen von optischen Abbildungen in einer zeitlichen Abfolge mit einer Zeilenkamera zweidimensionale optische Abbildungen erzeugt werden. Zeilenkameras haben des Weiteren den Vorteil, dass es besonders einfach ist, den Tiefenschärfebereich des Sensors schmaler als die Breite des Bandes auszugestalten. Aufgrund der Bewegung des Stückguts kann eine extrem kurze Belichtungszeit benötigt werden, was durch "Aufdrehen" der Blende erreichbar ist, damit viel Licht durch das Objektiv fallen kann. Diese große Blendenöffnung führt bevorzugt zu dem ge-ringen Schärfebereich. Im Zusammenhang mit dem Spalt im Gitter und der Ausgestaltung des optischen Sensors als Zeilenkamera ist bevorzugt vorgesehen, dass der Spalt im Gitter der Seitenführung und der Zeilenlichtsensor der Zeilenkamera in ihren Ausrichtungen zueinander korrespondieren. Bevorzugt ist der Spalt derart angeordnet, dass er sich senkrecht zur Ebene es Bandes erstreckt und die Zeilenkamera ist bevorzugt derart angeordnet, dass der Zeilenlichtsensor sich parallel zum Spalt erstreckt.

In Zusammenhang mit der Stückguterfassungsanordnung ist gemäß einer bevorzugten Weiterbildung vorgesehen, dass die Stückguterfassungsanordnung eine Auswerteeinrichtung zum Erkennen des Identifikationskennzeichens umfasst. Bevorzugt ist vorgesehen, dass die Auswerteeinrichtung dazu ausgestaltet ist, auf der vom optischen Sensor erzeugten optischen Abbildung das Identifikationskennzeichen des Stückgutes automatisiert zu erkennen. Es kann sich bei der Auswerteeinrichtung beispielsweise um einen Computer handeln. Bevorzugt ist die Auswerteeinrichtung kommunikationstechnisch mit dem optischen Sensor verbindbar oder mit dem optischen Sensor verbunden.

Gemäß einer weiteren bevorzugten Weiterbildung ist vorgesehen, dass der Tiefenschärfebereich und eine Fokusebene des Sensors derart eingestellt sind, dass das vom Sensor optisch erfasste Identifikationskennzeichen des Stückgutes für die Auswerteeinrichtung erkennbar ist. Besonders bevorzugt ist vorgesehen, dass die Fokusebene des Sensors im Bereich des Stückgutes liegt. So werden das Stückgut und insbesondere das Identifikationskennzeichen auf der optischen Abbildung hinlänglich scharf dargestellt, so dass es automatisiert von der Auswerteinrichtung erkennbar ist. Weiter bevorzugt ist vorgesehen, dass der Tiefenschärfebereich des Sensors derart schmal ist, dass auf der optischen Abbildung das Gitter unscharf abgebildet wird. So ist es aufgrund der Unschärfe des Gitters möglich, trotz des Gitters, das vom Sensor betrachtet sich zwischen dem Identifikationskennzeichen und dem optischen Sensor befindet, auf der optischen Abbildung das Identifikationskennzeichen mittels der Auswerteeinrichtung zu erkennen. Der Fachmann kann diese Einstellungen für die Fokusebene und den Tiefenschärfebereich beispielsweise mit einer kleinen Blendenzahl und/oder mit einem optischen Sensor mit langer Brennweite umsetzen.

Hinsichtlich der Auswerteeinrichtung ist gemäß einer bevorzugten Weiterbildung der Erfindung vorgesehen, dass die Auswerteeinrichtung einen automatisierten Bilderkennungsalgorithmus umfasst. Bevorzugt handelt es sich bei dem automatisierten Bilderkennungsalgorithmus um ein neuronales Netz, um einen selbstlernenden Algorithmus und/oder um eine künstliche Intelligenz. Weiterhin kann vorgesehen sein, dass die Auswerteeinrichtung einen Bildverbesserungsalgorithmus umfasst, der rechnerisch die vom optischen Sensor erzeugten optischen Abbildungen verändert. Beispielsweise kann eine Kontrasterhöhung an der optischen Abbildung durchgeführt werden. Dies kann das automatisierte Erkennen des Identifikationskennzeichens des Stückgutes auf der optischen Abbildung mittels der Auswerteeinrichtung vereinfachen.

In diesem Zusammenhang ist gemäß einer bevorzugten Weiterbildung der Erfindung vorgesehen, dass das Identifikationskennzeichen als Strichcode und/oder QR-Code ausgestaltet ist. Ein Strichcode und/oder QR-Code weist einen hohen Kontrast auf, so dass ein solches Identifikationskennzeichen besonders einfach mittels der Auswerteeinrichtung automatisiert erkennbar ist.

Die Aufgabe wird ferner durch ein Verfahren zum automatisierten Erkennen eines Identifikationskennzeichens eines Stückgutes gelöst, wobei das Stückgut mit einem Bandförderer entlang einer Förderrichtung transportiert wird, und der Bandförderer parallel zur Förderrichtung eine Seitenführung, zum Verhindern eines Herunterfallens des Stückgutes von einem Band des Bandförderers aufweist, die Seitenführung in einem Bereich mit einem Gitter ausgeführt ist, mit den Schritten:
- Anordnen eines optischen Sensors seitlich von dem Band und hinter dem Gitter an einer dem Band abgewandten Seite der Seitenführung derart, dass das Band und das Gitter in einem Sichtfeld des Sensors liegen,
- Einstellen eines Tiefenschärfebereichs des Sensors derart, dass der Tiefenschärfebereich schmaler als eine Breite des Bandes ist,
- Erfassen des Identifikationskennzeichens des Stückgutes mittels des Sensors, und
- Erkennen des Identifikationskennzeichens mittels einer Auswerteeinrichtung.

Das Verfahren sieht vor, dass der optische Sensor außerhalb des Gefahrenbereichs des Bandförderers angeordnet wird. Der Gefahrenbereich des Bandförderers wird seitlich von der Seitenführung begrenzt. Somit ermöglicht das Verfahren den Sensor zu warten, ohne dass dafür der Bandförderer gestoppt werden muss, da für die Wartung des Sensors das Betreten des Gefahrenbereichs nicht erforderlich ist. Bevorzugt wird das Verfahren umgesetzt, indem die oben beschriebene Stückguterfassungsanordnung verwendet wird. Das Anordnen des Sensors außerhalb des Gefahrenbereichs führt dazu, dass auch das Gitter in der Seitenführung im Sichtfeld des Sensors liegt. Um trotz des Gitters im Sichtfeld des Sensors das Identifikationskennzeichen mittels der Auswerteeinrichtung zu erkennen, umfasst das Verfahren den Schritt Einstellen des Tiefenschärfebereichs des Sensors derart, dass der Tiefenschärfebereich schmaler als die Breite des Bandes ist. Dies führt dazu, dass bei Fokussierung auf die Bandmitte der Tiefenschärfebereich des Sensors auf die Breite des Bandes begrenzt ist. Somit ist das Gitter außerhalb des Tiefenschärfebereichs des Sensors und das Identifikationskennzeichen kann trotz Gitter mittels der Auswerteeinrichtung erkannt werden.

Gemäß einer bevorzugten Weiterbildung der Erfindung ist vorgesehen, dass das Verfahren den folgenden Schritt umfasst:
- Einstellen einer Fokusebene des Sensors derart, dass die Fokusebene des Sensors in einem Bereich des Stückgutes liegt. Die Fokusebene des Sensors, also jene Ebene, deren Punkte in der optischen Abbildung als Bildpunkte und somit scharf dargestellt werden, wird also bevorzugt auf den Bereich des Stückgutes gelegt. Der Bereich des Stückgutes ist bevorzugt der Bereich auf dem Band des Bandförderers indem sich das Stückgut befindet. In anderen Worten wird mittels des optischen Sensors auf den Bereich des Stückgutes fokussiert. Bevorzugt wird auf das Stückgut fokussiert und besonders bevorzugt auf das Identifikationskennzeichen des Stückgutes. Somit befindet sich das Identifikationskennzeichen des Stückgutes innerhalb des Tiefenschärfebereichs des Sensors und wird hinlänglich scharf abgebildet, so dass es im nachfolgenden Schritt mittels der Auswerteeinrichtung automatisiert erkannt werden kann. Alternativ kann mit einem variablen Fokus gearbeitet werden, wobei in einem solchen Fall die Nahgrenze des Fokusbereichs bevorzugt hinter dem Gitter ist, gesehen vom Sensor aus.

In diesem Zusammenhang ist gemäß einer bevorzugen Weiterbildung der Erfindung vorgesehen, dass der Schritt
- Erfassen des Identifikationskennzeichen des Stückgutes mittels des Sensors, ein Erzeugen einer optischen Abbildung des Identifikationskenneichens des Stückgutes mittel des Sensors umfasst und der Schritt
- Erkennen des Identifikationskennzeichens mittels der Auswerteeinrichtung ein Erkennen des Identifikationskennzeichens auf der optischen Abbildung mittels der Auswerteeinrichtung umfasst. In anderen Worten wird mittels des optischen Sensors die optische Abbildung der Umgebung im Sichtfeld des Sensors erzeugt. Da sich das Stückgut und somit das Identifikationskennzeichen des Stückgutes im Sichtfeld des Sensors befinden, wird das Identifikationskennzeichen auf die optische Abbildung abgebildet. Die Auswerteeinrichtung erkennt automatisiert, bevorzugt mittels eines Bilderkennungsalgorithmus, das Identifikationskennzeichen des Stückgutes auf der optischen Abbildung.

Gemäß einer weiteren bevorzugten Weiterbildung der Erfindung ist vorgesehen, dass die Schritte
- Einstellen des Tiefenschärfebereichs des Sensors derart, dass der Tiefenschärfebereich schmaler als eine Breite des Bandes ist, und
- Einstellen der Fokusebene des Sensors derart, dass die Fokusebene des Sensors im Bereich des Stückgutes liegt,
derart ausgeführt werden, dass das vom Sensor optisch erfasste Identifikationskennzeichen des Stückgutes für die Auswerteeinrichtung erkennbar ist. Dies bedeutet bevorzugt, dass bei einem Stückgut, dass sich in der Bandmitte befindet, auf der optischen Abbildung das Identifikationskennzeichen hinlänglich scharf dargestellt wird und das Gitter unscharf dargestellt wird.

Weitere Ausführungen und Vorteile des Verfahrens ergeben sich in Analogie zu der zuvor beschriebenen Stückguterfassungsanordnung.

### Kurze Beschreibung der Zeichnungen

Nachfolgend wird die vorgeschlagene Lösung unter Bezugnahme auf die anliegenden Zeichnungen anhand bevorzugter Ausführungsbeispiele näher erläutert.

In den Zeichnungen zeigen
- Fig. 1: eine perspektivische Ansicht einer Stückguterfassungsanordnung, gemäß einer bevorzugten Ausführungsform der Erfindung,
- Fig. 2: eine schematische Draufsicht der Stückguterfassungsanordnung aus Figur 1,
- Fig. 3: eine schematische Darstellung einer Seitenführung, gemäß einer bevorzugten Ausführungsform der Erfindung,
- Fig. 4: eine schematische Darstellung der Seitenführung, gemäß einer weiteren bevorzugten Ausführungsform der Erfindung,
- Fig. 5: eine schematische Draufsicht der Stückguterfassungsanordnung, gemäß einer weiteren bevorzugten Ausführungsform der Erfindung, und
- Fig. 6: ein Flussdiagramm mit den Schritten eines Verfahrens zum automatisierten Erkennen eines Identifikationskennzeichens des Stückgutes, gemäß einer bevorzugten Ausführungsform der Erfindung.

### Detaillierte Beschreibung der Ausführungsbespiele

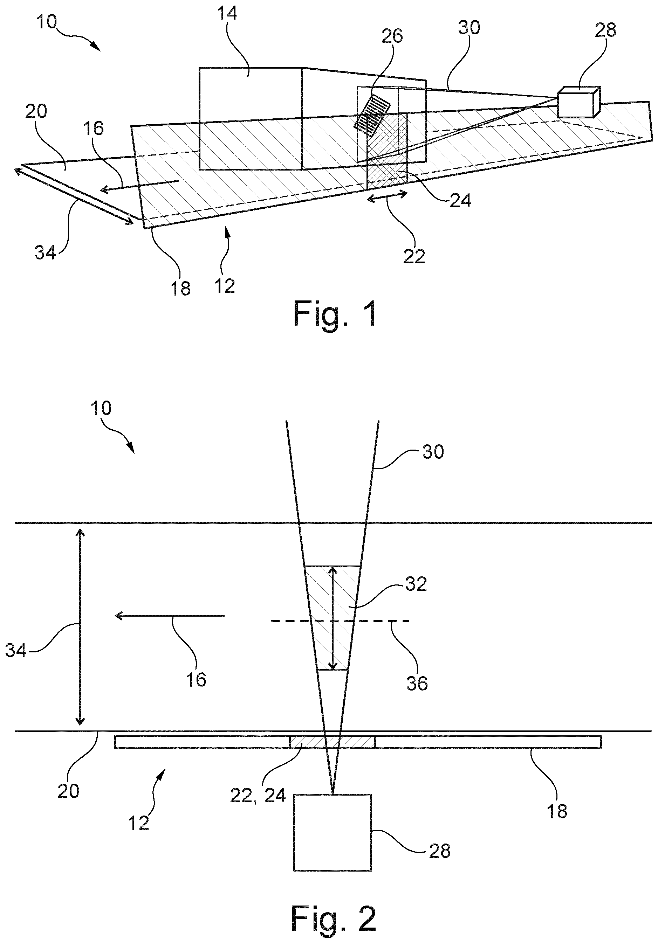

Figuren 1 und 2 zeigen eine Stückguterfassungsanordnung 1, gemäß einer bevorzugten Ausführungsform der Erfindung, wobei Figur 1 eine perspektivische Darstellung der Stückguterfassungsanordnung 10 und Figur 2 eine schematische Draufsicht zeigt. Die Stückguterfassungsanordnung 10 umfasst einen Bandförderer 12 zum Transportieren eines Stückgutes 14 entlang einer Förderrichtung 16. Der Bandförderer 10 weist parallel zu der Förderrichtung 16 eine Seitenführung 18 auf. Die Seitenführung 18 verhindert, dass das Stückgut 14 von einem Band 20 des Bandförderers 12 herunterfällt. Die Seitenführung 18 befindet sich seitlich vom Band 20 und erstreckt sich rechtwinklig zur Ebene des Bandes 20. Weiterhin ist die Seitenführung 18 in einem Bereich 22 mit einem Gitter 24 ausgeführt, außerhalb des Bereiches 22 jedoch intransparent. Das Stückgut 14 (nur in Figur 1 dargestellt) befindet sich auf dem Band 20 des Bandförderers 12 und weist ein Strichcode als Identifikationskennzeichen 26 auf.

Die Stückguterfassungsanordnung 10 umfasst ferner einen optischen Sensor 28. Der Sensor 28 ist seitlich von dem Band 20 und hinter dem Gitter 24 an einer dem Band 20 abgewandten Seite der Seitenführung 18 angeordnet. Der Sensor 28 ist derart angeordnet, dass das Band 20 und das Gitter 24 in einem Sichtfeld 30 des Sensors 28 liegen. Ein Tiefenschärfebereich 32 (nur in Figur 2 dargestellt) des Sensors 28 ist schmaler als eine Breite 34 des Bandes 20. Dadurch, dass der Tiefenschärfebereich 32 des Sensors 28 schmaler als die Breite 34 des Bandes 20 ist, ist der Tiefenschärfebereich 32 beim Fokussieren auf eine Bandmitte, also wenn eine Fokusebene 36 des Sensors 28 in der Mitte des Bandes 20 liegt, auf das Band 20 begrenzt.

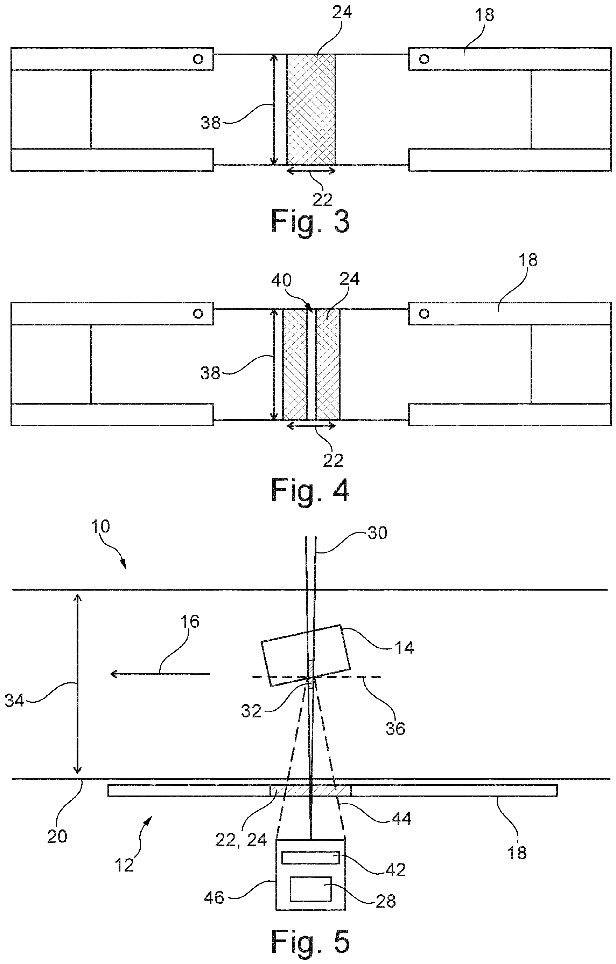

Figuren 3 und 4 zeigen zwei bevorzugte Ausführungsformen der Seitenführung 18 in Seitansicht. In der ersten Ausführungsform in Figur 3 weist die Seitenführung 18, analog zur Darstellung in den Figuren 1 und 2, im Bereich 22 das Gitter 24 auf. Der Bereich 22 ist in dieser Ausführungsform 20 cm lang und gleich hoch wie eine Höhe 38 der Seitenführung 18. In der zweiten Ausführungsform in Figur 4 weist das Gitter 24 zusätzlich noch einen Spalt 40 auf. Der Spalt 40 erstreckt sich innerhalb des Gitters 24 über die gesamte Höhe 38 der Seitenführung. Weiterhin erstreckt sich der Spalt 40 senkrecht zur Ebene des Bandes 20. In beiden Ausführungsformen ist das Gitter 24 als Maschendrahtgitter ausgeführt. Die Drähte des Maschendrahtgitters sind in dieser Ausführungsform 0,5 cm dick.

Figur 5 zeigt eine weitere Ausführungsform der Stückguterfassungsanordnung 10 aus der gleichen Perspektive wie Figur 2. In dieser Ausführungsform ist der optische Sensor 28 als Zeilenkamera ausgeführt. Der Sichtbereich 30 der Zeilenkamera ist sehr schmal. Weiterhin ist der Tiefenschärfebereich 32 der Zeilenkamera schmaler als 30 % der Breite 34 des Bandes 20. Um die vorhandene Lichtmenge zu erhöhen, umfasst der optische Sensor 28, sprich die Zeilenkamera, eine Beleuchtungseinrichtung 42. Die Beleuchtungseinrichtung 42 erzeugt einen Lichtkegel 44, der auf das Stückgut 14 fokussiert ist. Des Weiteren umfasst die Stückguterfassungsanordnung 10 eine Auswerteeinrichtung 46. Die Auswerteeinrichtung 46 ist kommunikationstechnisch mit dem Sensor 28 verbunden. Die Auswerteeinrichtung 46 ist dazu ausgestaltet, das Identifikationskennzeichen auf der vom Sensor erzeugten optischen Abbildung zu erkennen. Dafür umfasst die Auswerteeinrichtung 46 einen automatisierten Bilderkennungsalgorithmus, im hier bevorzugten Ausführungsbeispiel einen selbstlernenden Algorithmus.

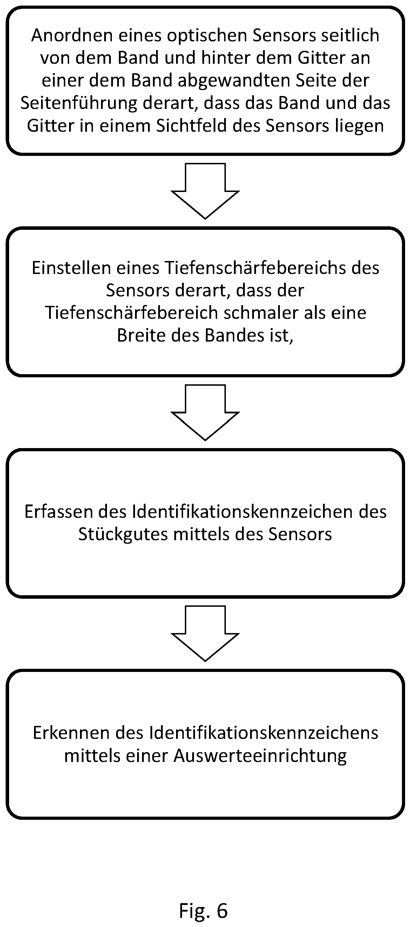

Figur 6 zeigt ein Flussdiagramm eines Verfahrens zum automatisierten Erkennen des Identifikationskennzeichens 26 des Stückgutes 14. Das Verfahren wird mit der Stückguterfassungsanordnung 10 aus Figur 5 durchgeführt. In einem ersten Schritt wird der optischen Sensors 28 seitlich von dem Band 20 und hinter dem Gitter 24 an einer dem Band 20 abgewandten Seite der Seitenführung 18 derart angeordnet, dass das Band 20 und das Gitter 24 im Sichtfeld 30 des Sensors 28 liegen.

In einem weiteren Schritt wird der Tiefenschärfebereich 32 des Sensors 28 derart eingestellt, dass der Tiefenschärfebereich 32 schmaler als die Breite 34 des Bandes 20 ist. Danach wird von dem Sensor 28 das Identifikationskennzeichen 26 des Stückgutes 14 erfasst und mittels der Auswerteeinrichtung 46 das Identifikationskennzeichen 26 erkannt.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Stückguterfassungsanordnung | 10 |
| Bandförderer | 12 |
| Stückgut | 14 |
| Förderrichtung | 16 |
| Seitenführung | 18 |
| Band | 20 |
| Bereich | 22 |
| Gitter | 24 |
| Identifikationskennzeichen | 26 |
| Optischer Sensor | 28 |
| Sichtfeld des Sensors | 30 |
| Tiefenschärfebereich | 32 |
| Breite des Bandes | 34 |
| Fokusebene des Sensors | 36 |
| Höhe der Seitenführung | 38 |
| Spalt | 40 |
| Beleuchtungseinrichtung | 42 |
| Lichtkegel | 44 |
| Auswerteeinrichtung | 46 |

## Patentansprüche

1. Stückguterfassungsanordnung (10) umfassend einen Bandförderer (12) zum Transportieren eines Stückgutes (14) aufweisend ein Identifikationskennzeichen (26) entlang einer Förderrichtung (16) und umfassend einen optischen Sensor (28), wobei
der Bandförderer (12) parallel zu der Förderrichtung (16) eine Seitenführung (18) zum Verhindern eines Herunterfallens des Stückgutes (14) von einem Band (20) des Bandförderers (12) aufweist,
**dadurch gekennzeichnet, dass**:
die Seitenführung (18) in einem Bereich (22) mit einem Gitter (24) ausgeführt ist,
der Sensor (28) seitlich von dem Band (22) und hinter dem Gitter (24) an einer dem Band (22) abgewandten Seite der Seitenführung (18) angeordnet ist, so dass das Band (20) und das Gitter (24) in einem Sichtfeld (30) des Sensors (28) liegen, und
ein Tiefenschärfebereich (32) des Sensors (28) schmaler als eine Breite (34) des Bandes (20) ist, so dass das Identifikationskennzeichen (26) des Stückgutes (14) durch den Sensor (28) optisch erfassbar ist.

2. Stückguterfassungsanordnung (10) nach dem vorhergehenden Anspruch, wobei das Gitter (24) im Sichtfeld (30) des Sensors (28) optisch intransparente Strukturen aufweist und die optisch intransparenten Strukturen nicht mehr als 20% des Sichtfelds (30) des Sensors (28) bedecken.

3. Stückguterfassungsanordnung (10) nach einem der vorhergehenden Ansprüche, wobei das Gitter (24) im Sichtfeld (30) des Sensors (28) optisch intransparente Strukturen aufweist, die in einer Ausdehnung kleiner als 2 cm sind.

4. Stückguterfassungsanordnung (10) nach einem der vorhergehenden Ansprüche, wobei das Gitter (24) im Sichtfeld (30) des Sensors (28) kein optisch transparentes Material umfasst.

5. Stückguterfassungsanordnung (10) nach einem der vorhergehenden Ansprüche, wobei das Gitter (24) im Sichtfeld (30) des Sensors (28) durch einen Spalt (40) unterbrochen ist.

6. Stückguterfassungsanordnung (10) einem der vorhergehenden Ansprüche, wobei der optische Sensor (28) eine Kamera ist.

7. Stückguterfassungsanordnung (10) nach einem der vorhergehenden Ansprüche, wobei die Stückguterfassungsanordnung (10) eine Auswerteeinrichtung (46) zum Erkennen des Identifikationskennzeichens (26) umfasst.

8. Stückguterfassungsanordnung (10) nach dem vorhergehenden Anspruch, wobei der Tiefenschärfebereich (32) und eine Fokusebene (36) des Sensors (28) derart eingestellt sind, dass das vom Sensor (28) optisch erfasste Identifikationskennzeichen (26) des Stückgutes (14) für die Auswerteeinrichtung (46) erkennbar ist.

9. Stückguterfassungsanordnung (10) nach Anspruch 7 oder 8, wobei die Auswerteeinrichtung (46) einen automatisierten Bilderkennungsalgorithmus umfasst.

10. Stückguterfassungsanordnung (10) nach einem der vorhergehenden Ansprüche, wobei Identifikationskennzeichen (26) als Strichcode und/oder QR-Code ausgestaltet ist.

11. Verfahren zum automatisierten Erkennen eines Identifikationskennzeichens (26) eines Stückgutes (14), wobei das Stückgut (14) mit einem Bandförderer (12) entlang einer Förderrichtung (16) transportiert wird, und der Bandförderer (12) parallel zur Förderrichtung (16) eine Seitenführung (18), zum Verhindern eines Herunterfallens des Stückgutes (14) von einem Band (20) des Bandförderers (12) aufweist,
**dadurch gekennzeichnet, dass** die Seitenführung (18) in einem Bereich (22) mit einem Gitter (24) ausgeführt ist, mit den Schritten:
- Anordnen eines optischen Sensors (28) seitlich von dem Band (20) und hinter dem Gitter (24) an einer dem Band (20) abgewandten Seite der Seitenführung (18) derart, dass das Band (20) und das Gitter (24) in einem Sichtfeld (30) des Sensors (28) liegen,
- Einstellen eines Tiefenschärfebereichs (32) des Sensors (28) derart, dass der Tiefenschärfebereich (32) schmaler als eine Breite (34) des Bandes (20) ist,
- Erfassen des Identifikationskennzeichens (26) des Stückgutes (14) mittels des Sensors (28), und
- Erkennen des Identifikationskennzeichens (26) mittels einer Auswerteeinrichtung (46).

12. Verfahren nach dem vorhergehenden Verfahrensanspruch, wobei das Verfahren den folgenden Schritt umfasst:
- Einstellen einer Fokusebene (36) des Sensors (28) derart, dass die Fokusebene (36) des Sensors (28) in einem Bereich des Stückgutes (14) liegt.

13. Verfahren nach einem der vorhergehenden Verfahrensansprüche, wobei der Schritt
- Erfassen des Identifikationskennzeichens (26) des Stückgutes (14) mittels des Sensors (28), ein Erzeugen einer optischen Abbildung des Identifikationskenneichens (26) des Stückgutes (14) mittel des Sensors (28) umfasst und der Schritt
- Erkennen des Identifikationskennzeichens (26) mittels der Auswerteeinrichtung (46) ein Erkennen des Identifikationskennzeichens (26) auf der optischen Abbildung mittels der Auswerteeinrichtung (46) umfasst.

14. Verfahren nach einem der vorhergehenden Verfahrensansprüche, wobei die Schritte
- Einstellen des Tiefenschärfebereichs (32) des Sensors (28) derart, dass der Tiefenschärfebereich (32) schmaler als die Breite (34) des Bandes (20) ist, und
- Einstellen der Fokusebene (36) des Sensors (28) derart, dass die Fokusebene (36) des Sensors (28) im Bereich des Stückgutes (14) liegt,
derart ausgeführt werden, dass das vom Sensor (28) optisch erfasste Identifikationskennzeichen (26) des Stückgutes (14) für die Auswerteeinrichtung (46) erkennbar ist.

## Claims

1. Package unit capturing arrangement (10), comprising a belt conveyor (12) for transporting a package unit (14) having an identification marking (26) along a conveying direction (16) and comprising an optical sensor (28), wherein
the belt conveyor (12) has, parallel to the conveying direction (16), a sideguard (18) for preventing the package unit (14) from falling off a belt (20) of the belt conveyor (12),
**characterized in that**:
the sideguard (18) is designed with a grate (24) in a region (22),
the sensor (28) is arranged laterally with respect to the belt (22) and behind the grate (24) on a side of the sideguard (18) facing away from the belt (22), so that the belt (20) and the grate (24) lie in a field of view (30) of the sensor (28), and
a depth of field region (32) of the sensor (28) is narrower than a width (34) of the belt (20), so that the identification marking (26) of the package unit (14) is optically capturable by the sensor (28).

2. Package unit capturing arrangement (10) according to the preceding claim, wherein the grate (24) in the field of view (30) of the sensor (28) has optically non-transparent structures and the optically non-transparent structures do not cover more than 20% of the field of view (30) of the sensor (28).

3. Package unit capturing arrangement (10) according to either of the preceding claims, wherein the grate (24) in the field of view (30) of the sensor (28) has optically non-transparent structures that have an extent of smaller than 2 cm.

4. Package unit capturing arrangement (10) according to one of the preceding claims, wherein the grate (24) in the field of view (30) of the sensor (28) comprises no optically transparent material.

5. Package unit capturing arrangement (10) according to one of the preceding claims, wherein the grate (24) in the field of view (30) of the sensor (28) is interrupted by a gap (40).

6. Package unit capturing arrangement (10) according to one of the preceding claims, wherein the optical sensor (28) is a camera.

7. Package unit capturing arrangement (10) according to one of the preceding claims, wherein the package unit capturing arrangement (10) comprises an evaluation device (46) for recognizing the identification marking (26).

8. Package unit capturing arrangement (10) according to the preceding claim, wherein the depth of field region (32) and a focal plane (36) of the sensor (28) are set such that the identification marking (26) of the package unit (14) that is optically captured by the sensor (28) is recognizable for the evaluation device (46).

9. Package unit capturing arrangement (10) according to Claim 7 or 8, wherein the evaluation device (46) comprises an automated image recognition algorithm.

10. Package unit capturing arrangement (10) according to one of the preceding claims, wherein the identification marking (26) is configured as a barcode and/or QR code.

11. Method for recognizing an identification marking (26) of a package unit (14) in an automated manner, wherein the package unit (14) is transported with a belt conveyor (12) along a conveying direction (16), and the belt conveyor (12) has, parallel to the conveying direction (16), a sideguard (18), for preventing the package unit (14) from falling off a belt (20) of the belt conveyor (12), **characterized in that** the sideguard (18) is designed with a grate (24) in a region (22), having the steps of:
- arranging an optical sensor (28) laterally with respect to the belt (20) and behind the grate (24) on a side of the sideguard (18) facing away from the belt (20) such that the belt (20) and the grate (24) lie in a field of view (30) of the sensor (28),
- setting a depth of field region (32) of the sensor (28) such that the depth of field region (32) is narrower than a width (34) of the belt (20),
- capturing the identification marking (26) of the package unit (14) by means of the sensor (28), and
- recognizing the identification marking (26) by means of an evaluation device (46).

12. Method according to the preceding method claim, wherein the method comprises the following step:
- setting a focal plane (36) of the sensor (28) such that the focal plane (36) of the sensor (28) lies in a region of the package unit (14).

13. Method according to either of the preceding method claims, wherein the step of
- capturing the identification marking (26) of the package unit (14) by means of the sensor (28) comprises generating an optical imaged representation of the identification marking (26) of the package unit (14) by means of the sensor (28), and the step of
- recognizing the identification marking (26) by means of the evaluation device (46) comprises recognizing the identification marking (26) on the optical imaged representation by means of the evaluation device (46).

14. Method according to one of the preceding method claims, wherein the steps of
- setting the depth of field region (32) of the sensor (28) such that the depth of field region (32) is narrower than the width (34) of the belt (20), and
- setting the focal plane (36) of the sensor (28) such that the focal plane (36) of the sensor (28) lies in the region of the package unit (14)
are performed such that the identification marking (26) of the package unit (14) that is optically captured by the sensor (28) is recognizable for the evaluation device (46).

## Revendications

1. Agencement de détection de colis de détail (10), comprenant un convoyeur à bande (12) destiné à transporter un colis de détail (14) présentant un signe d'identification (26) le long d'une direction de transport (16), et comprenant un capteur optique (28), dans lequel
le convoyeur à bande (12) présente en parallèle à la direction de transport (16) un guidage latéral (18) afin d'empêcher le colis de détail (14) de tomber d'une bande (20) du convoyeur à bande (12),
**caractérisé en ce que**
le guidage latéral (18) est dans une certaine zone (22) réalisé avec un grillage (24),
le capteur (28) est disposé latéralement par rapport à la bande (22) et derrière le grillage (24) sur un côté, détourné de la bande (22), du guidage latéral (18) de sorte que la bande (20) et le grillage (24) se trouvent dans un champ de vision (30) du capteur (28), et
une zone de profondeur de champ (32) du capteur (28) est plus étroite qu'une largeur (34) de la bande (20) de sorte que le signe d'identification (26) du colis de détail (14) peut être détecté optiquement par le capteur (28).

2. Agencement de détection de colis de détail (10) selon la revendication précédente, dans lequel le grillage (24) présente dans le champ de vision (30) du capteur (28) des structures optiquement opaques, et les structures optiquement opaques ne couvrent pas plus de 20 % du champ de vision (30) du capteur (28).

3. Agencement de détection de colis de détail (10) selon l'une quelconque des revendications précédentes, dans lequel le grillage (24) présente dans le champ de vision (30) du capteur (28) des structures optiquement opaques dont l'étendue est inférieure à 2 cm.

4. Agencement de détection de colis de détail (10) selon l'une quelconque des revendications précédentes, dans lequel le grillage (24) ne présente dans le champ de vision (30) du capteur (28) aucun matériau optiquement transparent.

5. Agencement de détection de colis de détail (10) selon l'une quelconque des revendications précédentes, dans lequel le grillage (24) dans le champ de vision (30) du capteur (28) est interrompu par une fente (40).

6. Agencement de détection de colis de détail (10) selon l'une quelconque des revendications précédentes, dans lequel le capteur optique (28) est une caméra.

7. Agencement de détection de colis de détail (10) selon l'une quelconque des revendications précédentes, dans lequel l'agencement de détection de colis de détail (10) comprend un dispositif d'évaluation (46) destiné à reconnaître le signe d'identification (26).

8. Agencement de détection de colis de détail (10) selon la revendication précédente, dans lequel la zone de profondeur de champ (32) et un plan focal (36) du capteur (28) sont réglés de telle sorte que le signe d'identification (26) optiquement détecté par le capteur (28) du colis de détail (14) est reconnaissable par le dispositif d'évaluation (46).

9. Agencement de détection de colis de détail (10) selon la revendication 7 ou 8, dans lequel le dispositif d'évaluation (46) comprend un algorithme de reconnaissance d'image automatisé.

10. Agencement de détection de colis de détail (10) selon l'une quelconque des revendications précédentes, dans lequel le signe d'identification (26) est configuré sous forme de code barres et/ou de code QR.

11. Procédé de reconnaissance automatisée d'un signe d'identification (26) d'un colis de détail (14), dans lequel le colis de détail (14) est transporté par un convoyeur à bande (12) le long d'une direction de transport (16), et le convoyeur à bande (12) présente en parallèle à la direction de transport (16) un guidage latéral (18) pour empêcher le colis de détail (14) de tomber d'une bande (20) du convoyeur à bande (12),
**caractérisé en ce que** le guidage latéral (18) est dans une certaine zone (22) réalisé avec un grillage (24), comprenant les étapes consistant à :
- disposer un capteur optique (28) latéralement par rapport à la bande (20) et derrière le grillage (24) sur un côté, détourné de la bande (20), du guidage latéral (18) de telle sorte que la bande (20) et le grillage (24) se trouvent dans un champ de vision (30) du capteur (28),
- régler une zone de profondeur de champ (32) du capteur (28) de telle sorte que la zone de profondeur de champ (32) est plus étroite qu'une largeur (34) de la bande (20),
- détecter le signe d'identification (26) du colis de détail (14) au moyen du capteur (28), et
- reconnaître le signe d'identification (26) au moyen d'un dispositif d'évaluation (46).

12. Procédé selon la revendication de procédé précédente, dans lequel le procédé comprend l'étape suivante consistant à :
- régler un plan focal (36) du capteur (28) de telle sorte que le plan focal (36) du capteur (28) se trouve dans une zone du colis de détail (14).

13. Procédé selon l'une quelconque des revendications de procédé précédentes, dans lequel l'étape consistant à
- détecter le signe d'identification (26) du colis de détail (14) au moyen du capteur (28) comprend la génération d'une image optique du signe d'identification (26) du colis de détail (14) au moyen du capteur (28), et l'étape consistant à
- reconnaître le signe d'identification (26) au moyen du dispositif d'évaluation (46) comprend la reconnaissance du signe d'identification (26) sur l'image optique au moyen du dispositif d'évaluation (46) .

14. Procédé selon l'une quelconque des revendications de procédé précédentes, dans lequel les étapes consistant à
- régler la zone de profondeur de champ (32) du capteur (28) de telle sorte que la zone de profondeur de champ (32) est plus étroite que la largeur (34) de la bande (20), et à
- régler le plan focal (36) du capteur (28) de telle sorte que le plan focal (36) du capteur (28) se trouve dans la zone du colis de détail (14),
sont effectuées de telle sorte que le signe d'identification (26) optiquement détecté par le capteur (28) du colis de détail (14) est reconnaissable par le dispositif d'évaluation (46).
